# EUROPEAN PATENT SPECIFICATION

(11) **EP 0 974 513 B1**
(45) Date of publication and mention of the grant of the patent: **24.11.2004**
(21) Application number: 98113945.4
(22) Date of filing: 24.07.1998
(51) Int. Cl.: B62J 35/00

(54) **Multiple tank unit for motorcycle or similar**
Mehrteiliger Tank für Motorrad
Réservoir multiple pour motocyclette

(30) Priority: 29.07.1997 IT MI970576 U
(43) Date of publication of application: 26.01.2000
(73) Proprietor: M.V. AGUSTA S.p.A, 21100 Varese (IT)
(72) Inventor: Tamburini, Massimo, 47895 Domagnano,Repubblica Di San Marino (SM)
(74) Representative: Giambrocono, Alfonso, Dr. Ing.

(56) References cited:
- EP-A- 0 536 719
- EP-A- 0 644 107
- DE-C- 762 952
- GB-A- 1 448 663

## Description

It is the object of this discovery a tank unit for motorcycle according to preamble of principal claim.

As it is well known, in a motorcycle a fuel tank, a box for air filter connected to engine and, in case this last one is liquid cooled, an expansion tank for this cooling liquid, are usually present.

Usually petrol tank, of metallic material (sheet metal) or of plastic material, has a special shape that in its front part goes over box or container of air filter (see EP 0644107); this front part has a wide surface, but reduced height in order to create a volume in tank that in majority of cases is not used up. Besides this superimposition, besides to limit available volume of filter box causes problems of accessibility to this last one being necessary for this operation, to disassemble petrol tank of vehicle, with subsequent problems connected to presence of pipings and electrical cables connected to this tank.

GB 1448663 and EP 0536719 describe other known solutions wherein at least one between the fuel tank and the box containing the air filter are covered by the other or by a third body. The above tank and box cannot be easily reached from their upper surface or part.

Same accessibility problems, in usual positions in which it is located, arise for expansion tank of cooling liquid when vehicle is provided with such a cooling system for its engine.

Purpose of present discovery is that to provide a tank unit that overcomes above mentioned inconveniences.

In particular, purpose of discovery is that of designing a tank unit that allows to improve volumes occupied at least by fuel tank and of filter box, and also to improve operationality of these last ones by making their accessability very much easier with reference to known solutions.

A further purpose is to design a tank unit that shows a valuable esthetic looking and that has limited weights.

These and other purposes which will become apparent to those skilled in the art are reached by a tank unit according to enclosed claims.

For a greater understanding of present discovery it is enclosed for only indicative reasons, but not restrictive ones, following drawings, in which:

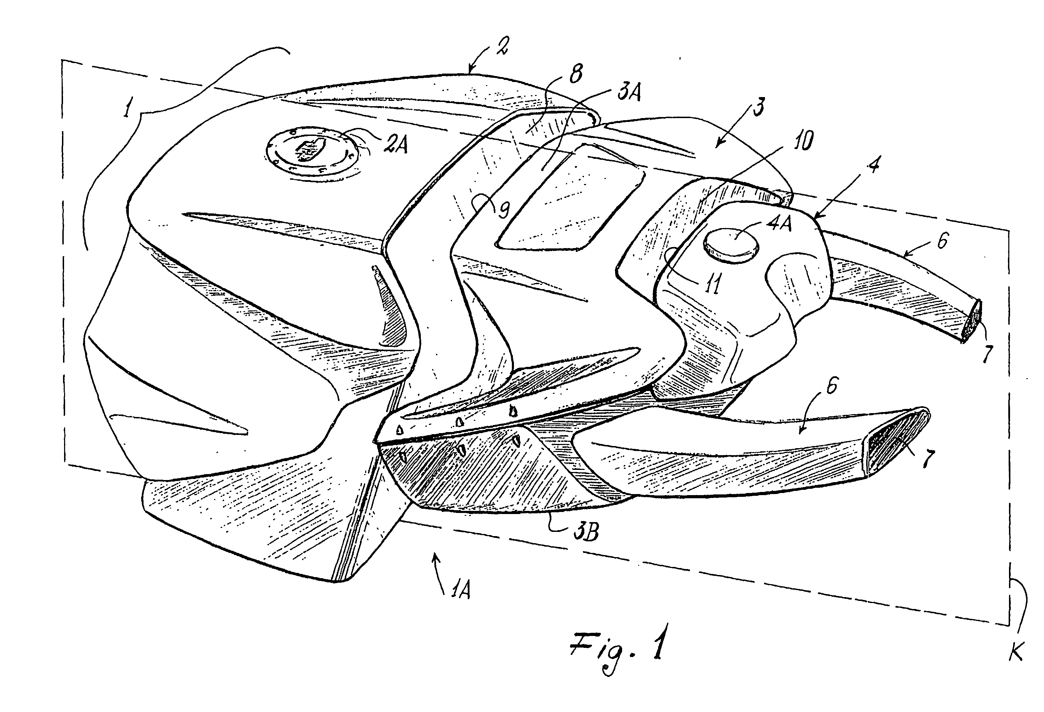

figure 1 shows a prospective view of tank unit according to discovery in one of its embodiments; and
figure 2 shows a side view of unit of figure 1.

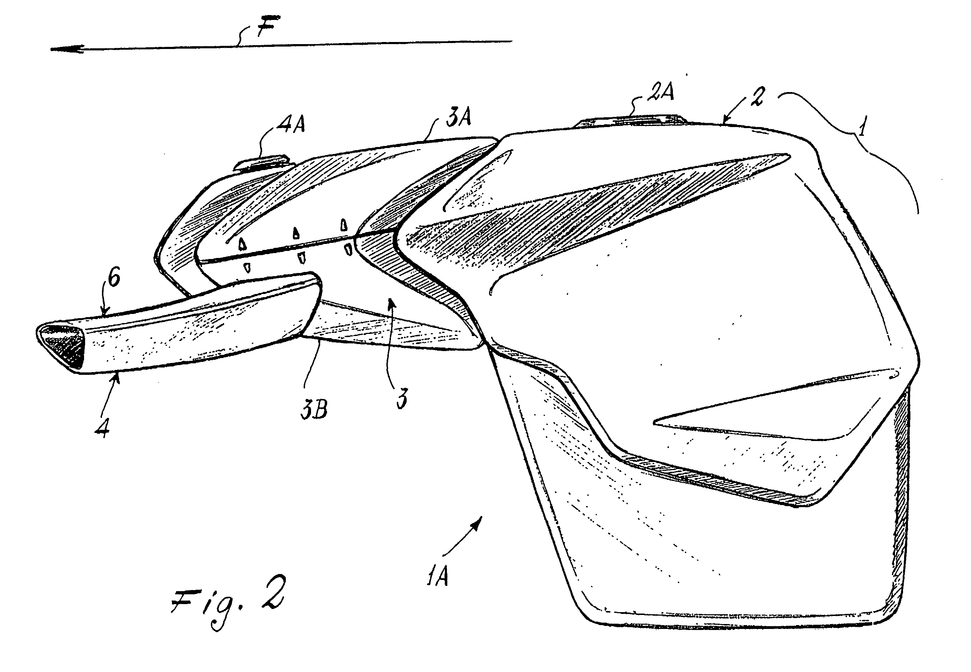

With reference to mentioned figures, in these a tank unit 1 is shown for a motorcycle or similar including a first portion 2 capable of operation like a fuel tank for motorcycle, a second portion 3 capable to operate like an air filter box and a third portion 4 capable to operate like an expansion tank of cooling liquid for this engine. Above mentioned portions 2,3 and 4 are placed one near the other and in particular in succession so that they come out all located one in front of the other in direction of movement of vehicle as indicated by arrow F of figure 2 (in other words located one near the other in a succession along average longitudinal plane K of motorcycle). Portions 2 and 4 are provided with an opening closed by a relevant closing unit (respectively 2A and 4A) capable to allow access to its inside hollow while portion 3 includes two usual components (3A,3B) that can be separated for access to air filter. Second portion, besides, shows assembly units 6 that protrudes from it and that is directed in direction of vehicle movement F in which a system of ducts is designed connected with the inside of this portion or box of filter 3. These units operate as air intake ducts for vehicle motor and are located on sides of tank or third position 4.

Assembly unit 1 defined in this way shows a body 1A that can be made as a one piece or designed substancially as a one piece by means of a stable and safe joining of portions 2,3 and 4. This joining can be obtained by providing on surfaces 8,9 and 10. 11 respectively of tank 2 and of filter box 3, and of this box and of tank 4, means which are already known (and not shown) capable to couple between themselves by a firm joint in order to attach these units and create substancially one body 1A only from a structural and transportation point of view. In this case, portions 2,3 and 4 of this body are placed in tight contact between them and without that any space be formed between them.

Joining between these portions can also be carried out with other systems by using attachment means (like screws or rivets) or various methodologies of attachment (by welding, with or without weld material, soldering, by gluing, etc.). Body 1A thus obtained comes out to be always substancially a one piece unit.

According to an alternative of this discovery, tank unit 1 can also be obtained by placing in succession, one near the other, portions 2,3 and 4 but keeping these last ones well separated between themselves. In this case body 1A of this assembly unit 1 includes a series or a plurality of discreet portions, physically separated and supported by vehicle chassis in an independent way.

According to another embodiment of this discovery, tank unit 1 includes a hollow body (for example in plastic material and obtained by means of molding system by multiple blowing or rotational) 1A in which various protions 2,3 and 4 are integrated among them and separated, inside this body, by walls defining various volumes of same body.

Thanks to this discovery a tank unit is obtained having limited overall dimensions (smaller with reference to other known units) in order to allow a better motor vehicle habitability. Besides, location of various portions 2,3 and 4 (tanks and filter box) of this unit improves very much operationality of motorcycle because inside of these portions is easily accessable without that this requires necessity to separate a few of them from chassis of vehicle.

In addition, not superimposing petrol tank 2 to filter box 3 (as in present state of the art), allows to recuperate volume of high area of same petrol tank, almost not used in traditional solutions, in favor of an increase of capacity of filter box, which has much importance from point of view of performances because it is through this filter that engine "breathes", and an easy accessability to air filter for a simpler maintenance ( because now we have only to act on attachment units of various parts of this box).

Final result is also a simplification of forms, especially as regards petrol tank, with a consequent easiness and economy of construction.

A few particular embodiments of this discovery were described herein and were mentioned. Other ones are still possible according to previous description (for example that in which unit 1 does not include tank 4) and these are to be thought falling within the scope of the present document as defined in the appended claims.

## Claims

1. Tank unit (1) for motorcycle, this last one including at least a fuel tank (2) and a container or box for air filter (3) associated with vehicle engine, being also present a possible expansion tank for cooling liquid (4) of this engine in case it is liquid cooled, said fuel tank (2), filter box (3) and possible expansion tank (4) being associated to usual chassis of motorcycle, at least fuel tank (2) and box for air filter (3) are located one near the other and define portions of tank unit (1) placed on this chassis, each of these portions (2,3) provided with an opening of their own for access to its inside hollow, this access being freely accomplished independently from adjacent portion, **characterized in that** said portions (2,3) of body (1A) of this unit are placed one after the other along a longitudinal average plane (K) of motorcycle, none of said portions (2,3) superimposing to the other, the upper surfaces of said portions (2,3) forming the upper surface of the tank unit (1).

2. Tank unit as illustrated in claim 1, **characterized in that** an expansion tank of cooling liquid defining a third portion (4) of said body (1A) is associated with fuel tank defining a first portion (2) of body (1A) of this unit and with box of air filter defining a second portion (3) of this body.

3. Tank unit as illustrated in claim 2, **characterized in that** box for air filter defining second portion (3) of body (1A) of this unit precedes fuel tank defining first portion (2) of this body along longitudinal average plane (K) in direction of motion (F) of vehicle, possible expansion tank of cooling liquid defining third portion (4) of this body (1A) preceding box of air filter (3) in above said direction of motion (F).

4. Tank unit as illustrated in claim 1, **characterized in that** at least one part with duct shape (6) in direction of motion (F) of motorcycle is protruding from box of air filter defining second portion (3) of body (1A) of this unit.

5. Tank unit as illustrated in claims 2 and 4, **characterized in that** duct shaped parts (6) are two and are located on sides of expansion tank of cooling liquid defining third portion (4) of body (1A) of tank unit (1).

6. Tank unit as illustrated in claim 1 or in claims 1 and 2, **characterized in that** various portions (2,3,4) of body (1A) of this unit (1) are associated between themselves so that this body (1A) is substantially a one piece.

7. Tank unit as illustrated in claim 6, **characterized in that** portions (2,3,4) of body (1A) of this unit (1) are attached between them in a movable way.

8. Tank unit as illustrated in claim 1, or in claims 1 and 2, **characterized in that** various portions (2,3,4) of body (1A) are separated among themselves.

9. Tank unit as illustrated in claim 1 or in claims 1 and 2, **characterized in that** its body (1A) is a one piece body, in it being defined its various portions (2,3,4) separated by walls.

## Patentansprüche

1. Tankeinheit (1) für ein Motorrad, das wenigstens einen Kraftstofftank (2) und ein Gehäuse oder eine Box für Luftfilter (3), die dem Fahrzeugmotor zugeordnet sind, aufweist, wobei auch ein möglicher Ausgleichsbehälter für Kühlflüssigkeit (4) dieses Motors vorhanden ist, falls er flüssigkeitsgekühlt ist, wobei der Kraftstofftank (2), die Filterbox (3) und der eventuelle Ausgleichsbehälter (4) einem gewöhnlichen Fahrgestell des Motorrads zugeordnet sind, wobei wenigstens der Kraftstofftank und die Box für Luftfilter (3) nahe beieinander angeordnet sind und Bereiche der Tankeinheit (1) definieren, die an diesem Fahrgestell platziert ist, wobei jeder dieser Bereiche (2, 3) mit einer eigenen Öffnung zum Zugriff auf dessen inneren Hohlraum versehen ist, wobei dieser Zugriff frei, unabhängig von dem benachbarten Bereich erreicht wird, **dadurch gekennzeichnet, dass** die Bereiche (2, 3) des Körpers (1A) dieser Einheit hintereinander entlang einer Längsmittelebene (K) des Motorrads angeordnet sind, wobei keiner der Bereiche (2, 3) den anderen überlagert, wobei die oberen Oberflächen der Bereiche (2, 3) die obere Oberfläche der Tankeinheit (1) bilden.

2. Tankeinheit nach Anspruch 1, **dadurch gekennzeichnet, dass** ein Ausgleichsbehälter für Kühlflüssigkeit, der einen dritten Bereich (4) des Körpers (1A) definiert, dem Kraftstofftank zugeordnet ist, der einen ersten Bereich des Körpers (1A) dieser Einheit bildet, und wobei die Luftfilterbox einen zweiten Bereich (3) dieses Körpers definiert.

3. Tankeinheit nach Anspruch 2, **dadurch gekennzeichnet, dass** der die Box für Luftfilter definierende zweite Bereich (3) des Körpers (1A) dieser Einheit dem den ersten Bereich (2) definierenden Kraftstofftank des Körpers entlang der Längsmittelebene (K) in Bewegungsrichtung (F) des Fahrzeugs vorausgeht, wobei ein möglicher Ausgleichsbehälter für Kühlflüssigkeit, der den dritten Bereich (4) dieses Körpers (1A) definiert, der Box für Luftfilter (3) in der oben genannten Bewegungsrichtung (F) vorausgeht.

4. Tankeinheit nach Anspruch 1, **dadurch gekennzeichnet, dass** wenigstens ein Teil mit Leitungsform (6) in Bewegungsrichtung (F) des Motorrads von der Box für Luftfilter vorsteht, die den zweiten Bereich (3) des Körpers (1A) dieser Einheit definiert.

5. Tankeinheit nach Ansprüchen 2 und 4, **dadurch gekennzeichnet, dass** zwei leitungsförmige Teile (6) vorhanden sind und an den Seiten des Ausgleichsbehälters für Kühlflüssigkeit liegen, der den dritten Bereich (4) des Körpers (1A) der Tankeinheit (1) definiert.

6. Tankeinheit nach Anspruch 1 oder nach Ansprüchen 1 und 2, **dadurch gekennzeichnet, dass** verschiedene Bereiche (2, 3, 4) des Körpers (1A) dieser Einheit (1) miteinander verbunden sind, so dass dieser Körper (1A) im Wesentlichen ein Stück ist.

7. Tankeinheit nach Anspruch 6, **dadurch gekennzeichnet, dass** die Bereiche (1, 2, 3, 4) des Körpers (1A) dieser Einheit (1) in beweglicher Weise miteinander verbunden sind.

8. Tankeinheit nach Anspruch 1 oder Ansprüchen 1 und 2, **dadurch gekennzeichnet, dass** verschiedene Bereiche (2, 3, 4) des Körpers (1A) voneinander getrennt sind.

9. Tankeinheit nach Anspruch 1 oder Ansprüchen 1 und 2, **dadurch gekennzeichnet, dass** ihr Körper (1A) ein einstückiger Körper ist, in dem seine verschiedenen Bereiche (2, 3, 4) separiert durch Wände definiert sind.

## Revendications

1. Unité de réservoir (1) pour motocyclette, cette dernière comprenant au moins un réservoir à essence (2) et un conteneur ou boîtier pour filtre à air (3) associés à un moteur de véhicule, et présentant également un possible réservoir d'expansion pour liquide de refroidissement (4) de ce moteur dans le cas où il est refroidi par liquide, ledit réservoir à essence (2), boîtier de filtre (3) et possible réservoir d'expansion (4) étant associés dans un châssis ordinaire de motocyclette, au moins le réservoir à essence (2) et le boîtier pour le filtre à air (3) sont disposés l'un à côté de l'autre et délimitent les parties de l'unité (1) du réservoir placé sur ce châssis, chacune de ces parties (2, 3) possédant sa propre ouverture pour accéder à sa partie intérieure creuse, cet accès étant librement réalisé indépendamment de la partie adjacente, **caractérisée en ce que** lesdites parties (2, 3) du corps (1A) de cette unité sont placées les unes après les autres le long d'un plan intermédiaire longitudinal (K) de la motocyclette, aucune desdites parties (2, 3) ne se chevauchant, des surfaces supérieures desdites parties (2, 3) formant la surface supérieure de l'unité de réservoir (1).

2. Unité de réservoir telle qu'illustrée selon la revendication 1, **caractérisée en ce que** le réservoir d'expansion du liquide de refroidissement délimitant une troisième partie (4) dudit corps (1A) est associée au réservoir à essence délimitant une première partie (2) du corps (1A) de cette unité et au boîtier du filtre à air délimitant une deuxième partie (3) de ce corps.

3. Unité de réservoir telle qu'illustrée selon la revendication 2, **caractérisée en ce que** le boîtier pour filtre à air délimitant la deuxième partie (3) du corps (1A) de cette unité précède le réservoir à essence délimitant la première partie (2) de ce corps le long du plan intermédiaire longitudinal (K) dans le sens de déplacement (F) du véhicule, un possible réservoir d'expansion du liquide de refroidissement délimitant une troisième partie (4) de ce corps (1A) précédent le boîtier du filtre à air (3) dans ledit sens de déplacement (F) ci-dessus.

4. Unité de réservoir telle qu'illustrée selon la revendication 1, **caractérisée en ce qu'**au moins l'une des parties en forme de conduite (6) dans le sens de déplacement (F) de la motocyclette fait saillie depuis le boîtier du filtre à air délimitant la deuxième partie (3) du corps (1A) de cette unité.

5. Unité de réservoir telle qu'illustrée selon les revendications 2 et 4, **caractérisée en ce que** les parties (6) en forme de conduite sont au nombre de deux et sont situées sur les côtés du réservoir d'expansion du liquide de refroidissement délimitant une troisième partie (4) du corps (1A) de l'unité (1) de réservoir.

6. Unité de réservoir telle qu'illustrée selon la revendication 1 ou selon les revendications 1 et 2, **caractérisée en ce que** les différentes parties (2, 3, 4) du corps (1A) de cette unité (1) sont associées entre elles si bien que ce corps (1A) constitue sensiblement une seule pièce.

7. Unité de réservoir telle qu'illustrée selon la revendication 6, **caractérisée en ce que** les parties (2, 3, 4) du corps (1A) de cette unité (1) sont fixées entre elles de manière mobile.

8. Unité de réservoir telle qu'illustrée selon la revendication 1, ou selon les revendications 1 et 2, **caractérisée en ce que** les différentes parties (2, 3, 4) du corps (1A) sont séparées entre elles.

9. Unité de réservoir telle qu'illustrée selon la revendication 1 ou selon les revendications 1 et 2, **caractérisée en ce que** son corps (1A) constitue un corps d'une seule pièce, et **en ce qu'**il est délimité par ses différentes parties (2, 3, 4) séparées par des parois.
